## Europäisches Patentamt
## European Patent Office
## Office européen des brevets

(11) Publication number: **0 033 190**
**A1**

# EUROPEAN PATENT APPLICATION

(21) Application number: **81300042.9**

(22) Date of filing: **07.01.81**

(51) Int. Cl.³: **H 02 H 9/02**
**H 01 H 81/00**

(30) Priority: **29.01.80 GB 8003016**

(43) Date of publication of application:
**05.08.81 Bulletin 81/31**

(84) Designated Contracting States:
**DE FR GB IT**

(71) Applicant: **LUCAS INDUSTRIES LIMITED**
**Great King Street**
**Birmingham, B19 2XF(GB)**

(72) Inventor: **Holt, William David**
**Garth Holme Keighley Road Lane Shaw Bridge**
**Colne Lancashire BB8 7HL(GB)**

(74) Representative: **Prutton, Roger et al,**
**MARKS & CLERK Alpha Tower A.T.V.Centre**
**Birmingham B1 1TT(GB)**

(54) **Overcurrent protection devices.**

(57) An overcurrent protection device includes an electromagnet having a current sensitive winding (11) and a voltage sensitive winding (12) in series, and a normally closed contact (10) in parallel with the voltage sensitive winding 12. The contact (10) opens if a current determined by the current sensitive winding 11 flows and is then held open by the voltage sensitive winding until the circuit in which it is connected is interrupted.

EP 0 033 190 A1

This invention relates to overcurrent protection devices intended primarily, but not exclusively for use in road vehicle electrical systems.

Various types of overcurrent relay have previously been proposed including electromagnetic types and thermal types. The thermal type are readily made self-resetting but tend to operate slowly. The electromagnetic type, although capable of reacting quickly to an overcurrent situation tend to be complicated and often require manual resetting.

It is an object of the invention to provide an electromagnetic overcurrent protection device which is of very simple configuration and does not require manual resetting.

An overcurrent protection device in accordance with the invention comprises an electromagnet having first and second windings and normally closed contact means openable by said electromagnet when the current through said first winding exceeds a predetermined level, said second winding being connected in parallel with said contact means and in series with said first winding.

Thus, when the device is connected in series with a load across a supply the second winding is normally shortcircuited by the contact means. When the current exceeds the predetermined level the contact means opens, thereby cutting off the load current, but also connecting the second winding across the supply and thereby maintaining the contact means open. When the supply is disconnected, even momentarily, the device resets automatically.

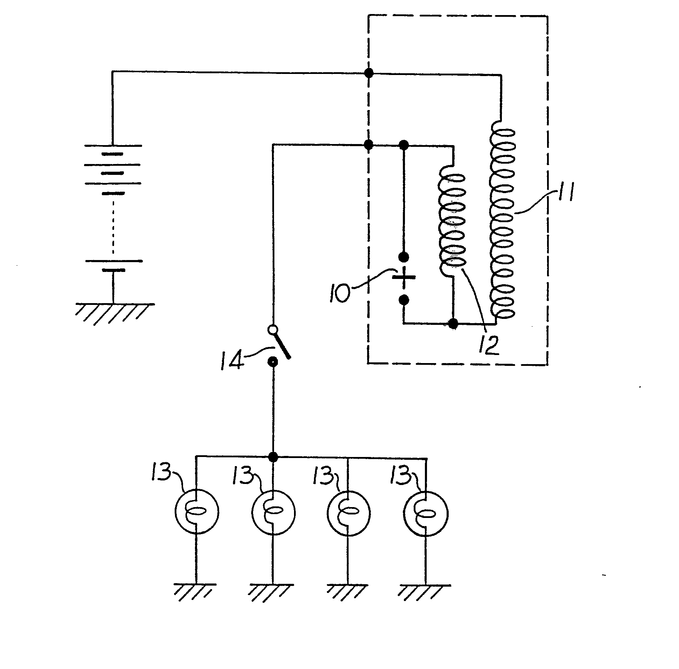

An example of the invention is shown in the accompanying drawing which is a circuit diagram of the device.

The device shown takes the form of a relay having one pair of normally closed contacts 10 in series with a current detector winding 11 and in parallel with a voltage detector winding 12. The number of windings and the gauge of the wire used for the current winding 11 will depend on the current level at which it desired that the relay should be tripped. The voltage winding 12, generally speaking will have significantly more turns of relatively fine gauge wire, so that it can hold the contacts 10 open whilst only a relatively light current is passing through it.

The device is connected, as shown, in series with a load, in this case a plurality of lamps, 13 and a switch 14 across a supply. Since the contact 10 is normally closed, the switch 14 determines whether or not the lamps are connected to the supply. Should any lamp, or any wire connecting the switch to the lamps 13, fail and become shorted to earth, the current in winding 11 will rise above the predetermined level required to trip the relay, so that contact 10 will open, interrupting the fault current. The winding 12 will now be connected across the supply and will pass a small current required to maintain the relay tripped until the switch 14 is opened.

It will be appreciated that when devices as described above are installed in a road vehicle electrical system it is not necessary to ensure that the device is in a readily accessible situation. Since the device resets automatically when there is no voltage across it, it can be situated at any position near the switch or load it is protecting.

CLAIMS

1.    An overcurrent protection device comprising an
electromagnet having first and second windings and normally
closed contact means openable by said electromagnet when
the current through said first winding exceeds a predetermined level, said second winding being connected in parallel
with said contact means and in series with said first
winding.

2.    A device as claimed in claim 1 in which said second
winding has a relatively large number of turns of relatively fine gauge wire, so as to be capable of maintaining said
contact means open whilst passing a relatively light current.

European Patent
Office

**EUROPEAN SEARCH REPORT**

| | DOCUMENTS CONSIDERED TO BE RELEVANT | | CLASSIFICATION OF THE APPLICATION (Int Cl 3) |
|---|---|---|---|
| Category | Citation of document with indication, where appropriate, of relevant passages | Relevant to claim | |
| X | DE - C - 820 463 (SIEMENS & HALSKE) <br> * claim 1; page 1, line 1 to page 2, line 7; fig. 1 * <br> ---- | 1,2 | H 02 H 9/02 <br> H 01 H 81/00 |

**TECHNICAL FIELDS SEARCHED (Int. Cl.³)**

H 01 H 81/00

H 02 H 3/08

H 02 H 9/02

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | | |
|---|---|---|---|
| Place of search | Date of completion of the search | Examiner | |
| Berlin | 14-04-1981 | LEMMERICH | |

EPO Form 1503.1 06.78